# EUROPÄISCHE PATENTSCHRIFT

(11) **EP 1 085 998 B1**
(45) Veröffentlichungstag und Bekanntmachung des Hinweises auf die Patenterteilung: **07.05.2003**
(21) Anmeldenummer: 99913076.8
(22) Anmeldetag: 16.02.1999
(51) Int. Cl.: B60N 2/28, B60N 2/00

(54) **VORRICHTUNG ZUM ERKENNEN EINES AUF EINEM FAHRZEUGSITZ ARRETIERTEN KINDERSITZES**
DEVICE FOR RECOGNITION OF A CHILD-RESTRAINT SEAT ATTACHED TO A VEHICLE SEAT
DISPOSITIF DE DETECTION D'UN SIEGE-ENFANT FIXE A UN SIEGE DE VEHICULE

(30) Priorität: 18.06.1998 DE 19827057
(43) Veröffentlichungstag der Anmeldung: 28.03.2001
(73) Patentinhaber: ROBERT BOSCH GMBH, 70442 Stuttgart (DE)
(72) Erfinder: JAKOB, Gert, D-70378 Stuttgart (DE); NITSCHKE, Werner, D-71254 Ditzingen (DE); SCHAUMANN, Arno, D-71638 Ludwigsburg (DE); BOHMWETSCH, Gerd, D-71672 Marbach (DE)
(86) Internationale Anmeldenummer: DE9900426
(87) Internationale Veröffentlichungsnummer: WO99065729

(56) Entgegenhaltungen:
- EP-A- 0 603 733
- WO-A-97/19835
- DE-A- 4 409 971
- DE-A- 4 426 677
- DE-U- 29 619 668
- US-A- 5 605 348

## Beschreibung

### Stand der Technik

Die Erfindung betrifft eine Vorrichtung zum Erkennen eines auf einem Fahrzeugsitz arretierten Kindersitzes mit den Merkmalen des Oberbegriffs des Anspruchs 1.

Untersuchungen z.B. durch die NHTSA (National Highway Traffic Safety Administration) in den USA haben ergeben, daß eine Airbagauslösung bei einem Kind in einem auf einem Fahrzeugsitz festgeschnallten Kindersitz ernsthafte Verletzungen verursachen kann. Die Auslösung von ein oder mehreren zu einem Fahrzeugsitz gehörenden Airbags, auf dem ein Kindersitz arretiert ist, soll daher in jedem Fall unterbunden werden. Einem im Fahrzeug vorhandenen Steuergerät, das die Auslösung der Airbags steuert, muß also signalisiert werden, wenn sich auf einem Fahrzeugsitz ein Kindersitz befindet, so daß es den bzw. die diesem Fahrzeugsitz zugeordneten Airbags bei einem Unfall nicht auslöst. Zum Stand der Technik gehören bereits Vorrichtungen, welche einen Kindersitz auf einem Fahrzeugsitz erkennen und dem Steuergerät diesen Zustand signalisieren.

Zum Beispiel aus der DE 44 09 971 C1, der DE 296 19 668 U1 und der US 5,605,348 sind Kindersitz-Erkennungsvorrichtungen bekannt, die nach dem Transponderprinzip arbeiten. Dabei befindet sich am Kindersitz ein Identifikationsträger, der im einfachsten Fall als elektromagnetischer Schwingkreis ausgeführt ist, und im Fahrzeugsitz ist ein Sendeelement angeordnet, das ein elektromagnetisches Wechselfeld abstrahlt. Ein Empfangselement im Fahrzeugsitz registriert die Feldveränderung, welche durch die Wechselwirkung zwischen dem Identifikationsträger am Kindersitz und dem vom Sendelement abgestrahlten elektromagnetischen Feld hervorgerufen wird. Eine solche auf dem Transponderprinzip basierende Kindersitzerkennung ist allerdings recht aufwendig.

Aus der gattungsbildenden DE 44 26 677 A1 ist eine Vorrichtung zum Arretieren eines Kindersitzes auf einem Fahrzeugsitz bekannt. Diese Vorrichtung besteht aus einem am Fahrzeug befestigten Gurtschlossgehäuse, in das ein Steckerelement des Kindersitzes einrastbar ist. In dem Gurtschlossgehäuse befindet sich ein Schaltmechanismus, der einen beweglichen Teil aufweist, der beim Einrasten des Steckerlements ein Gurtschlossgehäuse verschoben wird und dabei einen Kontakt schließt, womit einem Airbag-Steuergerät signalisiert wird, dass wegen des Kindersitzes eine Airbagauslösung unterbunden werden muß.

Der Erfindung liegt die Aufgabe zugrunde, eine Vorrichtung zum Erkennen eines auf einem Fahrzeugsitz arretierten Kindersitzes anzugeben, die mit möglichst geringem Aufwand realisierbar ist und mit sehr hoher Zuverlässigkeit einen auf einem Fahrzeugsitz arretierten Kindersitz erkennt.

### Vorteile der Erfindung

Die zuvor genannte Aufgabe wird mit den Merkmalen des Anspruchs 1 dadurch gelöst, daß an einem am Fahrzeugsitz installierten Befestigungsmittel, das mit einem am Kindersitz befindlichen Steckerelements verrastbar ist, ein Schaltmechanismus angeordnet ist, daß der Schaltmechanismus einen feststehenden, an dem Befestigungsmittel fixierten Teil und einen beweglichen Teil aufweist, der beim gegenseitigen Verrasten des Steckerelements mit dem Befestigungsmittel von dem Steckerelement in den feststehenden Teil hineinbewegt wird und dabei einen Schalter betätigt, so daß dadurch die Belegung des Beifahrersitzes mit einem Kindersitz signalisiert wird. Der Schalter besteht aus einem Reed-Schalter. Zudem ist ein Magnet vorhanden, der bei einer Verlagerung des beweglichen Teils in dem feststehenden Teil die Stellung des Reed-Schalters verändert.

Ein solcher Schaltmechanismus ist sehr leicht installierbar und gibt ganz sicher zu erkennen, ob ein Kindersitz auf einem Fahrzeugsitz angeschnallt worden ist. Außerdem ist dieser Schaltmechanismus sehr platzsparend aufgebaut.

Vorteilhafte Weiterbildungen der Erfindung gehen aus den Unteransprüchen hervor.

Vorzugsweise ist der Schalter im feststehenden Teil des Schaltmechanismus und der Magnet im beweglichen Teil angeordnet. Der Magnet liegt direkt über dem Reed-Schalter und schließt/öffnet ihn, wenn sich der bewegliche Teil in seiner nicht durch das Steckelement veränderten Ausgangslage befindet. Der Magnet ist vom Schalter entfernt und öffnet/schließt ihn, wenn der bewegliche Teil durch das Steckelement verlagert worden ist.

Der bewegliche Teil kann z.B. ein Schieber sein, der beim gegenseitigen Verrasten des Steckelements mit dem Befestigungsmittel von dem Steckerelement in den feststehenden Teil hineingeschoben wird. Eine im feststehenden Teil eingesetzte Druckfeder hält den Schieber in seiner Ausgangslage, wenn das Steckerelement nicht eingerastet ist.

Der bewegliche Teil kann auch ein im feststehenden Teil schwenkbar gelagerter Hebel sein, der beim gegenseitigen Verrasten des Steckerelements mit dem Befestigungsmittel von dem Steckerelement in den feststehenden Teil hineingeklappt wird. Eine im feststehenden Teil eingesetzte Spannfeder hält den Hebel in seiner Ausgangslage, wenn das Steckerelement nicht eingerastet ist.

### Beschreibung von Ausführungsbeispielen

Anhand mehrerer in der Zeichnung dargestellter Ausführungsbeispiele wird nachfolgend die Erfindung näher erläutert. Es zeigen:
Figur 1a einen Befestigungsbügel für einen Kindersitz,
Figur 1b einen ersten am Befestigungsbügel fixierten Schaltmechanismus mit einem Schieber in seiner Ausgangslage,
Figur 2 den ersten Schaltmechanismus mit eingeschobenem Schieber,
Figur 3 einen Längsschnitt A-A durch den ersten Schaltmechanismus vor dem Einrasten eines Steckerelements,
Figur 4 denselben Querschnitt A-A durch den ersten Schaltmechanismus mit eingerastetem Steckerelement,
Figur 5 einen zum Querschnitt A-A senkrecht stehenden Querschnitt E-E durch den ersten Schaltmechanismus,
Figur 6 einen Querschnitt C-C durch den ersten Schaltmechanismus,
Figur 7 einen Querschnitt D-D durch den ersten Schaltmechanismus,
Figur 8 einen zweiten Schaltmechanismus in einer 3D-Darstellung,
Figur 9 den zweiten Schaltmechanismus, in zusammengebauter Form,
Figur 10 einen Längsschnitt F-F durch den zweiten Schaltmechanismus vor dem Einrasten des Steckerelements,
Figur 11 einen Längsschnitt F-F durch den zweiten Schaltmechanismus mit eingerastetem Steckerelement,
Figur 12 einen Längsschnitt G-G durch den zweiten Schaltmechanismus und
Figur 13 eine Spannfeder.

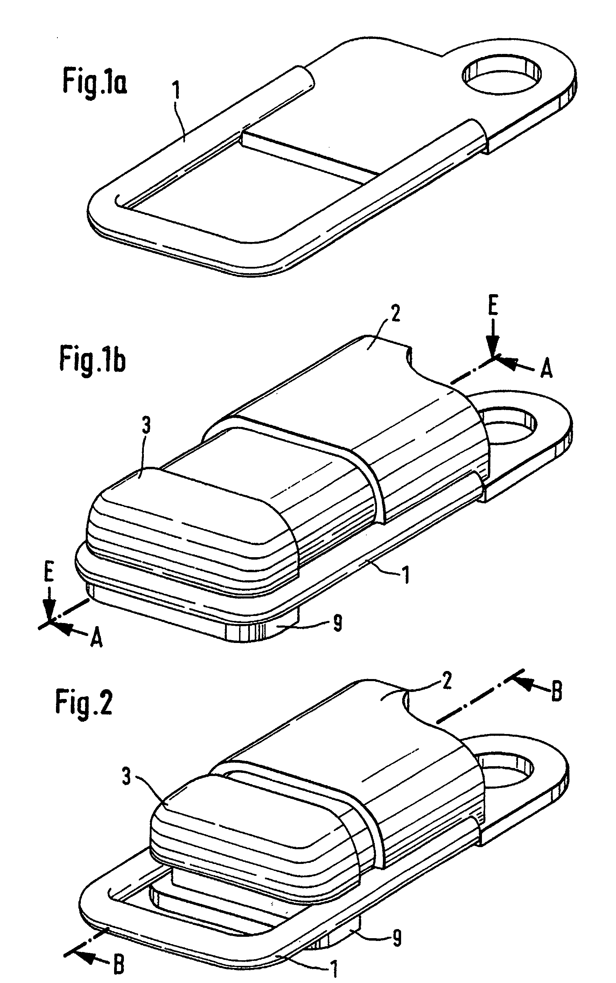

Den Figuren 1a, 1b und 2 entnimmt man perspektivische Darstellungen einer Vorrichtung zum Erkennen eines auf einem Fahrzeugsitz arretierten Kindersitzes.

In der Figur 1a ist ein Befestigungsmittel 1 in Form eines Bügels (nachfolgend als Befestigungsbügel bezeichnet) dargestellt, der an einem Fahrzeugsitz, in der Regel ist das der Beifahrersitz, installiert ist. Mit diesem Befestigungsbügel 1 kann ein an einem Kindersitz vorhandenes Steckerelement verrastet werden, um den Kindersitz auf dem Fahrzeugsitz zu arretieren. Um erkennen zu können, ob der Befestigungsbügel 1 mit dem Steckerelement eines Kindersitzes verrastet worden ist, gibt es einen in Figur 1b perspektivisch dargestellten Schaltmechanismus, der aus einem feststehenden, mit dem Befestigungsbügel 1 fixierten Teil 2 und einem beweglichen Teil 3 besteht. Bei diesem ersten Ausführungsbeispiel des Schaltmechanismus besteht der bewegliche Teil 3 aus einem Schieber, der in den feststehenden Teil hineingeschoben wird, wenn das Steckerelement am Kindersitz mit dem Befestigungsbügel 1 verrastet wird. Die perspektivische Darstellung in Figur 2 zeigt einen Schaltmechanismus, bei dem der Schieber 3 in den feststehenden Teil 2 hineingeschoben ist.

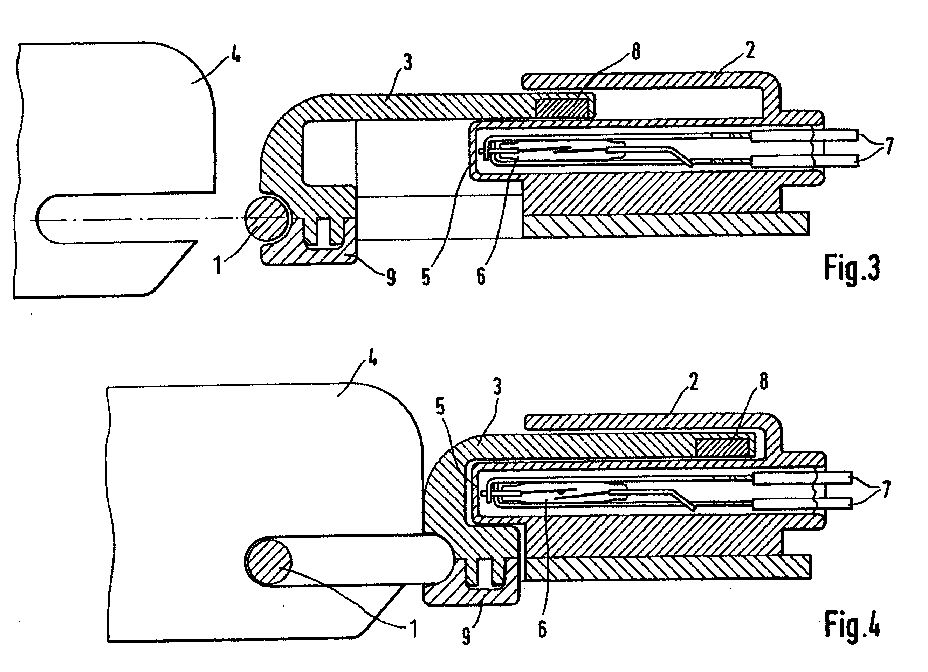

Zur näheren Erläuterung der Funktion des Schaltmechanismus sind mehrere Längs- und Querschnitte in den Figuren 3 bis 7 dargestellt.

Die Figur 3 zeigt einen Längsschnitt A-A durch den in Figur 1b dargestellten ersten Schaltmechanismus mit einem Schieber 3 in seiner Ausgangslage, die er einnimmt, wenn das Steckerelement 4 des Kindersitzes nicht mit dem Befestigungsbügel 1 verrastet ist. Der feststehende Teil 2 des Schaltmechanismus weist einen als Rohr 5 ausgebildeten Aufnahmeraum für einen Reed-Schalter 6 auf. Die Anschlüsse 7 des Reed-Schalters 6 führen aus dem feststehenden Teil 2 heraus zu einem nicht dargestellten Steuergerät, das die Auslösung der Airbags im Fahrzeug steuert. Der Schieber 3 gleitet auf dem Rohr 5 entlang. In seiner über dem Rohr 5 liegenden Wandung ist ein Dauermagnet 8 eingelassen. In der Ausgangslage des Schiebers 3, also dann, wenn wie in Figur 3 dargestellt, das Steckerelement 4 nicht mit dem Befestigungsbügel 1 verrastet ist, liegt der Magnet 8 direkt über dem Reed-Schalter 6. Je nach dem, wie der Reed-Schalter ausgebildet ist, wird er durch das Feld des Magneten 8 geschlossen oder geöffnet. In dem dargestellten Ausführungsbeispiel ist der Reed-Schalter 6 geschlossen.

Die Figur 4 zeigt einen Längsschnitt B-B durch den in der Figur 2 dargestellten Schaltmechanismus in einem Zustand, in dem der Schieber 3 von dem mit dem Befestigungsbügel 1 verrasteten Steckelement 4 in den feststehenden Teil 2 hineingeschoben worden ist. In dieser Position des Schiebers 3 ist der Magnet 8 von dem Reed-Schalter 6 entfernt, wodurch sich der Reed-Schalter 6 je nach seiner Bauart öffnet oder schließt. In dem in Figur 4 dargestellten Ausführungsbeispiel führt die Wegbewegung des Magneten zu einem Öffnen des Reed-Schalters 6. Das Einrasten des Steckerelements 4 am Kindersitz mit dem Befestigungsbügel 1 am Fahrzeugsitz führt also zu einer Änderung der Schalterstellung, welche das Steuergerät für die Airbagauslösung als einen Kindersitzes auf dem Fahrzeugsitz registriert.

An der Unterseite des Schiebers 3 ist ein Formteil 9 angeschraubt, das den Befestigungsbügel teilweise umfaßt und als Gleithilfe für den Schieber 3 dient.

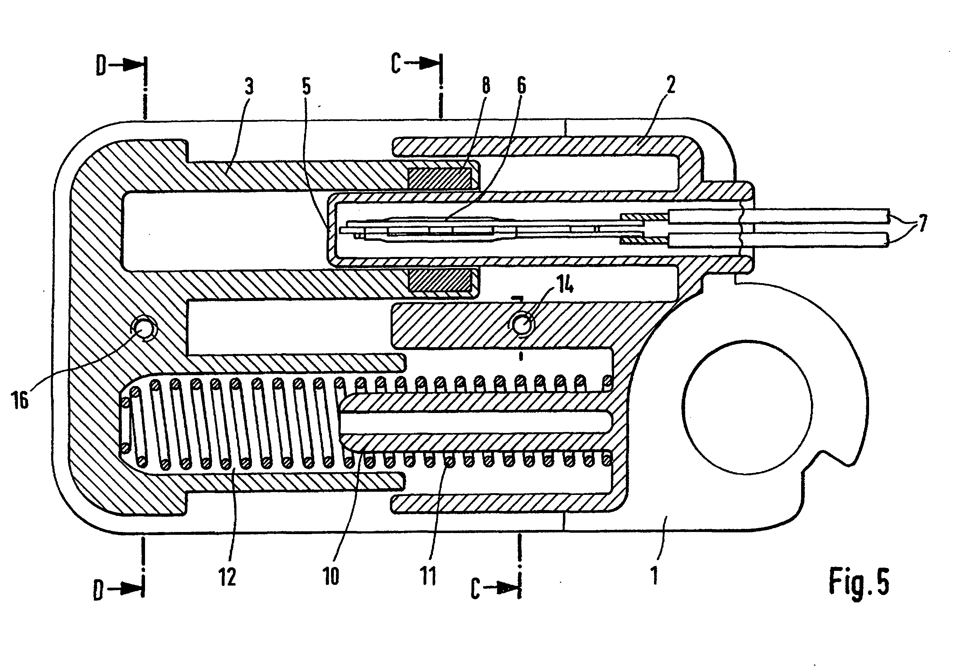

In der Figur 5 ist ein weiterer zum Längsschnitt A-A senkrecht verlaufender Längsschnitt E-E durch den Schaltmechanismus dargestellt. Diese Ansicht zeigt, daß in dem feststehenden Teil 2 auf einem Zapfen 10 eine Druckfeder 11 sitzt, welche in eine Vertiefung 12 in den Schieber 3 hineinragt und dafür sorgt, daß der Schieber 3 in seine Ausgangslage gehalten wird, wenn nicht ein Steckerelement 4 den Schieber 3 gegen die Druckfeder 11 in den feststehenden Teil 2 hineindrückt.

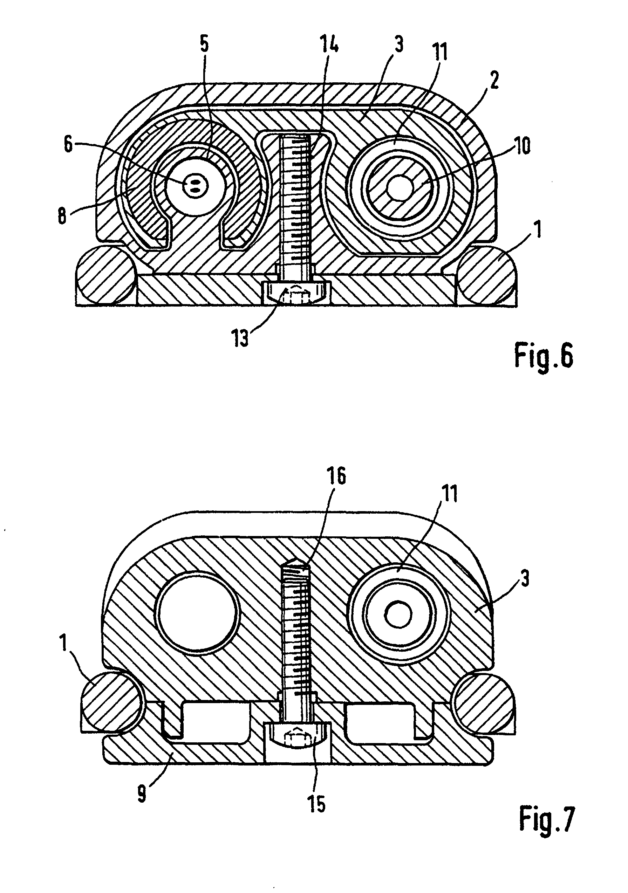

Ein in der Figur 6 dargestellter Querschnitt C-C durch den feststehenden Teil 2 verdeutlicht nochmals die Anordnung der Druckfeder 11 auf dem Zapfen 10 und des Magneten 8, welcher das Rohr 5, in dem sich der Reed-Schalter 6 befindet, fast vollständig umschließt. Die Querschnittsdarstellung in Figur 6 zeigt auch die Verschraubung des Befestigungsbügels 1 mit dem feststehenden Teil 2 mittels einer Schraube 13, welche in eine Gewindebohrung 14 in dem feststehenden Teil 2 hineingedreht ist.

Ein in der Figur 7 dargestellter Querschnitt D-D durch den Schieber 3 zeigt, daß das Formteil 9 mit dem Schieber 3 mittels einer Schraube 15 verbunden ist, welche in eine Gewindebohrung 16 in dem Schieber 3 hineingedreht ist.

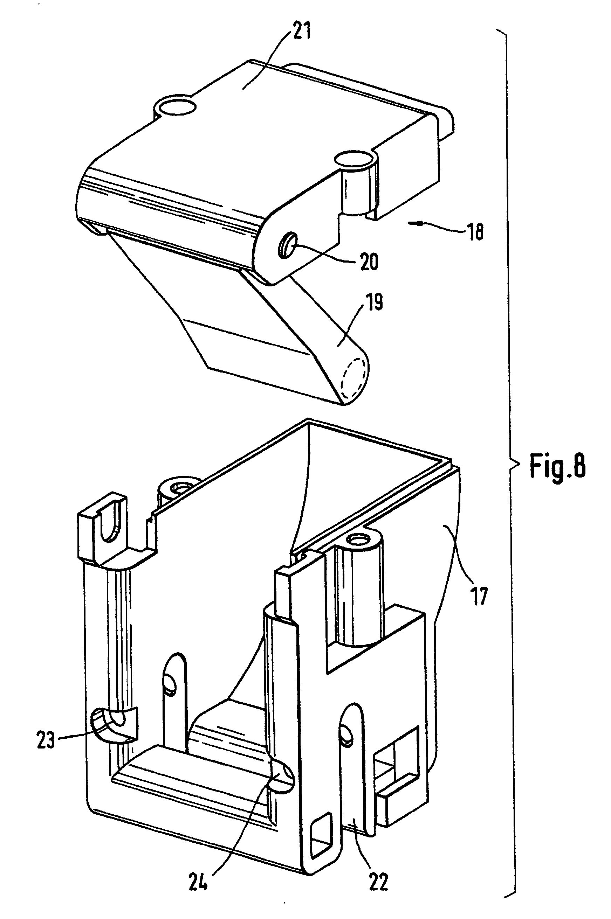

In den Figuren 8 bis 13 ist eine zweite Ausführung eines Schaltmechanismus dargestellt.

Die Figur 8 zeigt eine perspektivische Ansicht des Schaltmechanismus, der wiederum aus einem feststehenden Teil 17 und einem beweglichen Teil 18 besteht. Beide Teile 17 und 18 sind in der Figur 8 getrennt voneinander dargestellt, um zu verdeutlichen, daß der bewegliche Teil 18 im wesentlichen aus einem Hebel 19 besteht, der um eine Achse 20 an einem auf den feststehenden Teil 17 aufschraubbaren Deckel 21 schwenkbar gelagert ist.

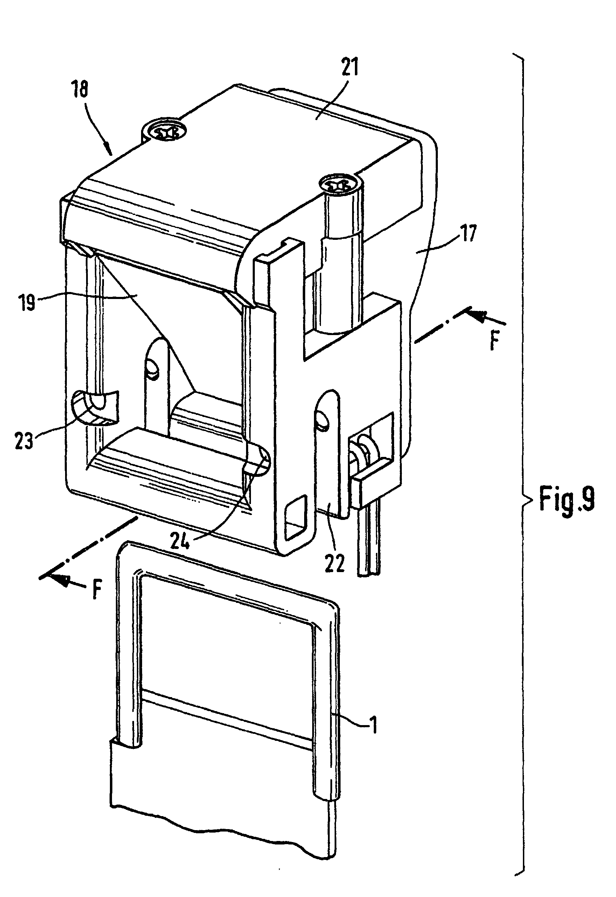

Die Figur 9 zeigt eine Ansicht des Schaltmechanismus, bei dem der bewegliche Teil 18 mit dem feststehenden Teil 17 verschraubt ist. An der dem Deckel 21 gegenüberliegenden Seite des Gehäuses 17 ist ein Schlitz 22 eingelassen, in dem der Befestigungsbügel 1 des Fahrzeugsitzes in den feststehenden Teil 17 eingeführt werden kann. Schraubenlöcher 23 und 24, die senkrecht zum Schlitz 22 verlaufen, deuten an, daß der Befestigungsbügel 1 im Schlitz 22 verschraubt wird.

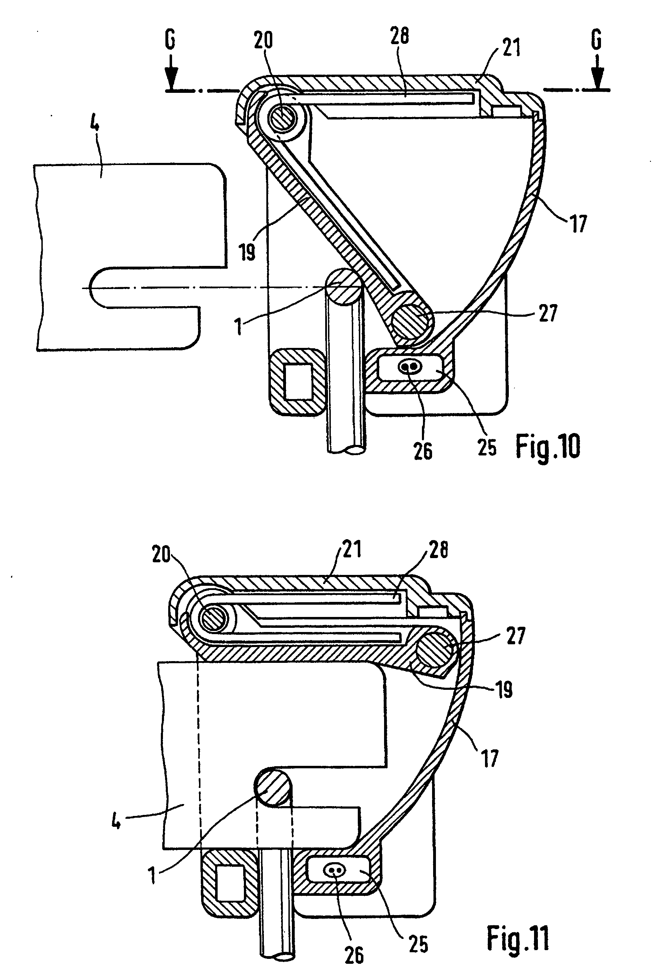

Die aus der Zeichenebene herausweisende Vorderseite des feststehenden Teils 17 ist offen, so daß dadurch das Steckerelement 4 des Kindersitzes eingeführt und mit dem Befestigungsbügel 1 verrastet werden kann. Diesen Vorgang verdeutlichen die in den Figuren 10 und 11 dargestellten Längsschnitte F-F durch die Teile 17 und 18.

Der Figur 10 ist zu entnehmen, daß im Boden des feststehenden Teils 17 eine Kammer 25 vorgesehen ist zur Aufnahme eines Reed-Schalters 26. Auf der der Kammer 25 gegenüberliegenden Seite des feststehenden Teils 17 ist der Hebel 19 um eine Achse 20 am Deckel 21 schwenkbar gelagert. An seinem der Schwenkachse 20 entfernten Ende trägt der Hebel 19 einen Magneten 27. Die Figur 10 zeigt die Ausgangslage des Hebels 19, in der das Steckerelement 4 nicht in den feststehenden Teil 17 eingesteckt ist, um es an dem Befestigungsbügel 1 einzurasten. Bei dieser Ausgangslage des Hebels 19 liegt sein Magnet 27 direkt über dem Reed-Schalter 26. Je nach Bauart des Reed-Schalters bewirkt das Magnetfeld des Magneten 27 entweder ein Schließen oder ein Öffnen des Schalters.

Wird nun, wie in der Figur 11 dargestellt, das Steckerelement 4 in den feststehenden Teil 17 hineingeschoben, so wird der Hebel 19 nach oben geschwenkt, wobei sich der Magnet 27 vom Reed-Schalter 26 entfernt. Dadurch ändert sicher der Schaltzustand des Reed-Schalters von Schließen in Öffnen oder umgekehrt, ein Signal für das Steuergerät, das Auslösen der für den Fahrzeugsitz zuständigen Airbags zu unterbinden.

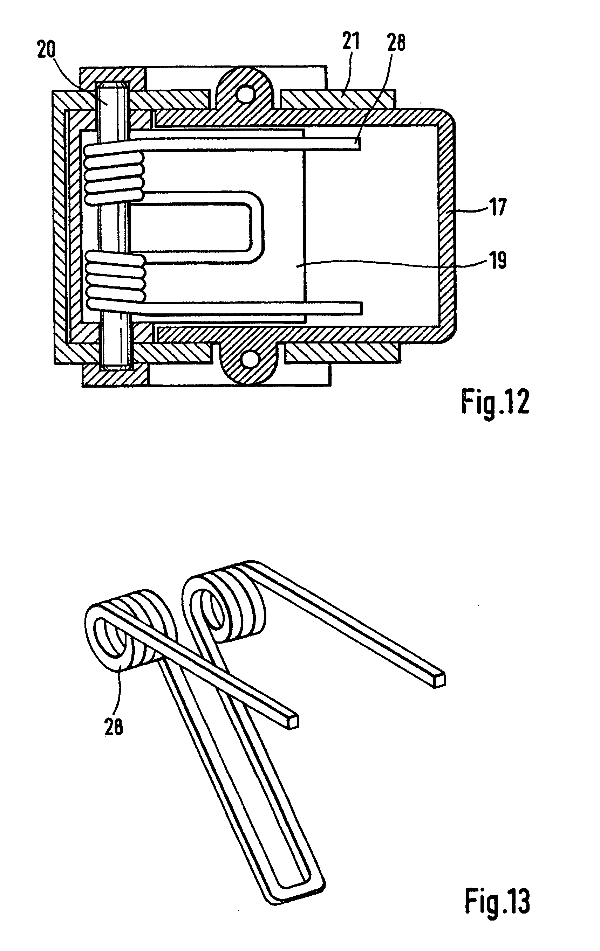

Die Figur 12 zeigt einen Längsschnitt G-G in der Höhe des Deckels 28 durch den Schaltmechanismus. Darin ist erkennbar, daß in den feststehenden Teil 17 eine Spannfeder 28, wie sie z.B. in der Figur 13 dargestellt ist, eingesetzt ist. Diese Spannfeder 28 bewirkt, daß der schwenkbare Hebel 19 in seiner Ausgangslage gehalten wird, das heißt, daß er mit seinem Ende gegen den Boden oberhalb der Kammer 25 des feststehenden Teils gedrückt wird (vgl. Figur 10).

## Patentansprüche

1. Vorrichtung zum Erkennen eines auf einem Fahrzeugsitz arretierten Kindersitzes, wobei an einem am Fahrzeug installierten Befestigungsmittel (1), das mit einem am Kindersitz befindlichen Steckerelement (4) verrastbar ist, ein Schaltmechanismus (2, 3, 17, 18) angeordnet ist und der Schaltmechanismus (2, 3, 17, 18) einen feststehenden, an dem Befestigungsmittel (1) fixierten Teil (2, 17) und einen beweglichen Teil (3, 18) aufweist, der beim gegenseitigen Verrasten des Steckerelements (4) mit dem Befestigungsmittel (1) von dem Steckerelement (4) in den feststehenden Teil (2, 17) hineinbewegt wird und dabei einen Schalter (6, 26) betätigt, so daß dadurch die Belegung des Fahrzeugsitzes mit einem Kindersitz signalisiert wird, **dadurch gekennzeichnet, daß** der Schalter ein Reed-Schalter (6, 26) ist und daß ein Magnet (8, 27) vorhanden ist, der bei einer Verlagerung des beweglichen Teils (3, 18) in dem feststehenden Teil (2, 17) die Stellung des Reed-Schalters (6, 26) verändert.

2. Vorrichtung nach Anspruch 1, **dadurch gekennzeichnet, daß** der Reed-Schalter (6, 26) im feststehenden Teil (2, 17) des Schaltmechanismus und der Magnet (8, 27) im beweglichen Teil (3, 18) angeordnet ist, daß der Magnet (3, 18) direkt über dem Reed-Schalter (6, 26) liegt und ihn schließt/öffnet, wenn sich der bewegliche Teil (3, 18) in seiner nicht durch das Steckerelement (4) veränderten Ausgangslage befindet, und daß der Magnet (8, 27) vom Reed-Schalter (6, 26) entfernt ist und dieser sich dadurch öffnet/schließt, wenn der bewegliche Teil (3, 18) durch das Steckerelement (4) verlagert worden ist.

3. Vorrichtung nach Anspruch 1, **dadurch gekennzeichnet, daß** der bewegliche Teil (3) ein Schieber ist, der beim gegenseitigen Verrasten des Steckerelements (4) mit dem Befestigungsmittel (1) von dem Steckerelement (4) in den feststehenden Teil (2) hineingeschoben wird.

4. Vorrichtung nach Anspruch 3, **dadurch gekennzeichnet, daß** eine im feststehenden Teil (3) eingesetzte Druckfeder (11) den Schieber (3) in seiner Ausgangslage hält, wenn das Steckerelement (4) nicht eingerastet ist.

5. Vorrichtung nach Anspruch 1, **dadurch gekennzeichnet, daß** der bewegliche Teil ein im feststehenden Teil (17) schwenkbar gelagerter Hebel (19) ist, der beim gegenseitigen Verrasten des Steckerelements (4) mit dem Befestigungsmittel (1) von dem Steckerelement (4) in dem feststehenden Teil (17) hineingeklappt wird.

6. Vorrichtung nach Anspruch 5, **dadurch gekennzeichnet, daß** eine im feststehenden Teil (17) eingesetzte Spannfeder (28) den Hebel (19) in seiner Ausgangslage hält, wenn das Steckerelement (4) nicht eingerastet ist.

## Claims

1. Device for detecting a child-restraint seat attached to a vehicle seat, a switching mechanism (2, 3, 17, 18) being arranged on a fastening means (1) which is installed on a vehicle and which can be locked to a plug element (4) located on the child-restraint seat, and the switching mechanism (2, 3, 17, 18) having a fixed part (2, 17) which is secured to the fastening means, and a movable part (3, 18) which, when the plug element (4) and the fastening means (1) are locked to one another, is moved into the fixed part (2, 17) by the plug element (4) and in the process actuates a switch (6, 26) so that, as a result, the occupation of the vehicle seat by a child-restraint seat is signalled, **characterized in that** the switch is a Reed switch (6, 26), and **in that** there is a magnet (8, 27) which changes the position of the Reed switch (6, 26) when the movable part (3, 18) is moved into the fixed part (2, 17).

2. Device according to Claim 1, **characterized in that** the Reed switch (6, 26) is arranged in the fixed part (2, 17) of the switching mechanism, and the magnet (8, 27) is arranged in the movable part (3, 18), **in that** the magnet (3, 18) is located directly above the Reed switch (6, 26) and closes/opens it when the movable part (3, 18) is located in its home position which is not changed by the plug element (4), and **in that** the magnet (8, 27) is removed from the Reed switch (6, 26) and the latter as a result opens/closes if the movable part (3, 18) has been moved by the plug element (4).

3. Device according to Claim 1, **characterized in that** the movable part (3) is a slide which, when the plug element (4) and the fastening means (1) are locked to one another, is pushed into the fixed part (2) by the plug element (4).

4. Device according to Claim 3, **characterized in that** a compression spring (11) which is inserted into the fixed part (3) holds the slide (3) in its home position if the plug element (4) is not locked in.

5. Device according to Claim 1, **characterized in that** a movable part is a lever (19) which is pivotably mounted on the fixed part (17) and which, when the plug element (4) and the fastening means (1) are locked to one another, is folded into the fixed part (17) by the plug element (4).

6. Device according to Claim 5, **characterized in that** a tensioning spring (28) which is inserted into the fixed part (17) holds the lever (19) in its home position if the plug element (4) is not locked in.

## Revendications

1. Dispositif de détection d'un siège enfant fixé à un siège de véhicule,
dans lequel
un mécanisme de connexion (2, 3, 17, 18) est placé sur un moyen de fixation (1), installé sur le véhicule, qu'on peut encliqueter avec un élément d'insertion (4) placé sur le siège enfant, le mécanisme de connexion (2, 3, 17, 18) présente une partie fixe (2, 17) fixée sur le moyen de fixation (1) et une partie mobile (3, 18) laquelle est introduite par l'élément d'insertion (4) dans la partie fixe (2, 17) lorsque l'élément d'insertion (4) et le moyen de fixation (1) sont encliquetés l'un dans l'autre et qui actionne alors un interrupteur (6, 26), de sorte que la présence d'un siège enfant sur le siège du passager est signalée de ce fait,
**caractérisé en ce que**
l'interrupteur est un interrupteur à lame souple (6, 26), et un aimant (8, 27) modifie la position de l'interrupteur à lame souple (6, 26) lors d'un déplacement de la partie mobile (3, 18) dans la partie fixe (2, 17).

2. Dispositif selon la revendication 1,
**caractérisé en ce que**
l'interrupteur à lame souple (6, 26) est placé dans la partie fixe (2, 17) du mécanisme de connexion et l'aimant (8, 27) dans la partie mobile (3, 18), l'aimant (3, 18) est placé juste au-dessus de l'interrupteur à lame souple (6, 26) et l'ouvre/le ferme lorsque la partie mobile (3, 18) se trouve dans sa position initiale non modifiée par l'élément d'insertion (4), et l'aimant (8, 27) est à distance de l'interrupteur à lame souple (6, 26) et de ce fait celui-ci s'ouvre/se ferme lorsque la partie mobile (3, 18) a été déplacée par l'élément d'insertion (4).

3. Dispositif selon la revendication 1,
**caractérisé en ce que**
la partie mobile (3) est un coulisseau qui est introduit par l'élément d'insertion (4) dans la partie fixe (2) lorsque l'élément d'insertion (4) et le moyen de fixation (1) sont encliquetés l'un dans l'autre.

4. Dispositif selon la revendication 3,
**caractérisé en ce qu'**
un ressort de pression (11) introduit dans la partie fixe (3) maintient le coulisseau (3) dans sa position initiale lorsque l'élément d'insertion (4) n'est pas encliqueté.

5. Dispositif selon la revendication 1,
**caractérisé en ce que**
la partie mobile peut aussi être un levier (19), placé de façon à pivoter dans la partie fixe (17), qui est poussé dans la partie fixe (17) par l'élément d'insertion (4) lorsque l'élément d'insertion (4) et le moyen de fixation (1) sont encliquetés l'un dans l'autre.

6. Dispositif selon la revendication 5,
**caractérisé en ce qu'**
un ressort de tension (28) introduit dans la partie fixe (17) maintient le levier (19) dans sa position initiale lorsque l'élément d'insertion (4) n'est pas encliqueté.
